# EUROPÄISCHE PATENTSCHRIFT

(11) **EP 3 731 358 B1**
(45) Veröffentlichungstag und Bekanntmachung des Hinweises auf die Patenterteilung: **17.03.2021**
(21) Anmeldenummer: 20165746.7
(22) Anmeldetag: 26.03.2020
(51) Int. Cl.: H02G 3/08, H02G 3/12

(54) **INSTALLATIONSDOSE UND INSTALLATIONSDOSENANORDNUNG MIT EINER SOLCHEN INSTALLATIONSDOSE**
INSTALLATION BOX AND INSTALLATION BOX ASSEMBLY WITH SUCH AN INSTALLATION BOX
PRISE D'INSTALLATION ET AGENCEMENT DE PRISE D'INSTALLATION DOTÉ D'UNE TELLE PRISE D'INSTALLATION

(30) Priorität: 26.04.2019 DE 202019102361 U
(43) Veröffentlichungstag der Anmeldung: 28.10.2020
(73) Patentinhaber: OBO Bettermann Hungary Kft., 2347 Bugyi (HU)
(72) Erfinder: Harms, Heiko, 58708 Menden (DE)
(74) Vertreter: Haverkamp, Jens

(56) Entgegenhaltungen:
- DE-A1- 10 253 252
- FR-A1- 3 011 139
- US-A- 1 962 317

## Beschreibung

Die Erfindung betrifft eine Installationsdose für elektrische und/oder elektronische Installationen mit einem zur Aufnahme zumindest einer elektrischen/elektronischen Komponente dienenden Dosenkörper, umfassend einen Boden, eine umlaufende Wand und eine Montageöffnung, welcher Dosenkörper wenigstens eine durch eine Weichkunststoffmembran verschlossene, in der Wand oder, falls vorhanden, einer Übergangsfläche zwischen der Wand und dem Boden befindliche Installationsöffnung aufweist, welche Weichkunststoffmembran eine Öffnungshandhabe trägt. Die Erfindung betrifft ferner eine Installationsdosenanordnung mit einer solchen Installationsdose.

Installationsdosen werden für die Installation von elektrischen und/oder elektronischen Geräten in Gebäuden eingesetzt. Bei derartigen Installationsdosen handelt es sich typischerweise um Hohlwanddosen, mithin um Installationsdosen, die unter Putz montiert werden. Derartige Installationsdosen verfügen über einen Dosenkörper, der durch einen Boden, eine umlaufende Wand und eine dem Boden gegenüberliegende Montageöffnung gebildet ist. Die Montageöffnung stellt diejenige Öffnung des Dosenkörpers dar, durch die die elektrischen/elektronischen Geräte darin eingesetzt werden. Auch wird über die Montageöffnung die Verkabelung innerhalb der Installationsdose und somit zu den von dieser abgehenden Leitungen vorgenommen. Als elektrische/elektronische Installationsgeräte kommen Steckdosen, Geräteträger, elektrische/elektronische Schaltgeräte, wie beispielsweise Dimmer oder dergleichen in Frage. An den Dosenkörper ist an seinen die Montageöffnung einfassenden Wandabschnitt ein in radialer Richtung nach außen vorspringender Stützflansch angeformt. Dieser dient zur Begrenzung der Einsetztiefe der Hohlwanddose, wenn diese in ein in eine Gebäudewand angebrachtes Dosenloch eingesetzt wird. Festgesetzt wird eine solche als Hohlwanddose ausgeführte Installationsdose in der wandseitigen Dosenöffnung mittels in radialer Richtung ausstellbarer Klemmkörper.

In dem Dosenkörper der Installationsdose sind typischerweise an ungekrümmten Abschnitten derselben Installationsöffnungen vorgesehen. Diese dienen zum Einführen eines Verbindungsrohrstückes typischerweise vom Dosenkörperinneren her, um eine erste Installationsdose mit einer zweiten unter Bereitstellung eines Verbindungstunnels miteinander zu verbinden. Das Verbindungsrohrstück verfügt über einen Anschlagflansch, mit dem dieser an dem Lochrandbereich der Installationsöffnung anliegt, wenn das Verbindungsrohrstück weit genug durch die Installationsöffnung hindurchgeführt ist.

Derartige als Hohlwanddosen ausgelegte Installationsdosen werden auch in Trockenbauwänden verbaut. Bei einem solchen Anwendungsfall ist vielfach gefordert, dass die durch die Wand bereitgestellte Winddichtigkeit zwischen zwei Räumen oder sogar zur Außenhaut des Gebäudes durch den Einbau von derartigen Installationsdosen, wenn diese von gegenüberliegenden Seiten in eine solche Trockenbauwand eingesetzt werden, nicht nachteilig beeinflusst wird. Bei Installationsdosen, bei denen es nicht auf eine Wind- und Rauchdichtigkeit ankommt, können die Installationsöffnungen durch Ausbrechteile vorbereitet sein. Bei diesen Ausbrechteilen handelt es sich um Kunststoffteile aus demselben Material wie der Dosenkörper selbst, und zwar Hartkunststoff, die mit Abbrechstegen mit dem eine solche Installationsöffnung umgebenden Material des Dosenkörpers verbunden sind. Je nach Bedarf werden dann die erforderlichen Installationsöffnungen durch Ausbrechen eines solchen Ausbrechteils geöffnet. Bei winddicht ausgeführten Installationsdosen ist jede Installationsöffnung mit einer Weichkunststoffmembran verschlossen.

Eine solche Installationsdose verfügt in aller Regel des Weiteren über Rohreinführungen zum Ein- bzw. Herausführen von Leitungen in den durch den Dosenkörper bereitgestellten Installationshohlraum hinein bzw. aus diesem heraus. Diese Öffnungen dienen zum Anschließen von Installationsrohren, beispielsweise Kunststoffwellschläuchen, in denen ein oder mehrere Kabel geführt sind. Die vorbeschriebenen Installationsöffnungen können ebenfalls bei Bedarf als Rohreinführung genutzt werden.

Zum Öffnen einer solchen Installationsöffnung wird die Weichkunststoffmembran entfernt. Sind zwei Installationsdosen mit einem Verbindungsrohrstück zu verbinden, wird dieses in aller Regel vorgenommen, bevor eine solche aus den beiden Installationsdosen gebildete Doppeldose wand- oder deckenseitig montiert wird. Zum Entfernen der Weichkunststoffmembran kann an diese außenseitig eine Handhabungslasche angeformt sein. Zum Entfernen der Weichkunststoffmembran wird diese erfasst und die Weichkunststoffmembran dann vom Dosenkörper abgerissen, bevor das Verbindungsrohrstück durch die dann nicht mehr verschlossene Installationsöffnung hindurchgesteckt wird.

FR 3 011 139 A1 offenbart eine Installationsdose, bei der außenseitig auf der eine Installationsöffnung des Dosenkörpers überspannenden Weichkunststoffmembran eine Öffnungshandhabe angeformt ist. Diese ragt aus der Ebene der Weichkunststoffmembran als Handhabungslasche ab. Zum Öffnen der Installationsöffnung wird die Öffnungshandhabe ergriffen und zum Ausreißen der die Installationsöffnung überspannenden Weichkunststoffmembran von dem Dosenkörper weggezogen, bis die Membran ein- bzw. ausgerissen ist.

Aus US 1 962 317 A ist ein Metallgehäuse für elektrische Installationen bekannt. In den Seitenwänden befinden sich vordefinierte Installationsöffnungen, die durch eine Ausbrechscheibe verschlossen sind. Die Ausbrechscheibe verfügt über einen nach außen ausgestellten Bügel, durch den eine Werkzeugaufnahme bereitgestellt ist, damit dieser Installationsöffnungsverschluss mittels eines Schraubendrehers, dessen Klingenspitze in die durch den Bügel geschaffene Werkzeugaufnahme eingesetzt ist, herausgebrochen werden kann.

DE 102 35 252 offenbart eine Installationsdose mit in der Dosenwand angeordneten ausbrechbaren Wandteilen. Der Dosenkörper ist aus Kunststoff. Die Wandteile sind durch Aufbringen eines in radialer Richtung ausgeübten Druckes aus der Hartkunststoffwandung ausbrechbar. Herausgebrochen wird ein solches Wandteil, wenn in die Installationsdose ein Rohr oder eine Verkabelung eingeführt werden soll.

Mitunter kommt es jedoch vor, dass eine erste Installationsdose mit einer zweiten Installationsdose mittels eines solchen Verbindungsrohrstückes verbunden werden soll, wenn bereits eine der beiden Installationsdosen wand- oder deckenseitig montiert und mit elektrischen/elektronischen Komponenten bestückt ist. Gleiches gilt auch, wenn zwei Installationsdosen wandseitig nebeneinander montiert und bestückt sind und erst dann, beispielsweise auch im Wege einer Nachrüstung eine Kabelkanalverbindung zwischen diesen beiden Installationsdosen benötigt wird. Bei montierten Installationsdosen gestaltet sich das Öffnen bzw. Entfernen der Weichkunststoffmembran von einer solchen Installationsöffnung als überaus schwierig, wenn man die in dem Dosenkörper bereits installierten Leitungen und elektrischen/elektronischen Komponenten nicht komplett deinstallieren möchte. In der Regel trifft dies besonders dann zu, wenn Änderungen an der Beschaltung bzw. Verdrahtung durchzuführen sind und/oder neue bzw. zusätzliche Leitungen und/oder Schaltkreise in die Verdrahtung mit einbezogen werden müssen. In besonders schwierigen Fällen muss hier sogar eine komplette Demontage der Hohlwanddose in Betracht gezogen werden, um die Weichkunststoffmembran öffnen zu können. Dies ist mit erheblichem Zeitaufwand verbunden. Derzeitig behilft man sich zum Öffnen einer solchen Installationsöffnung im eingebauten Zustand mit manuell gebogenen Drahtabschnitten, um an die Weichkunststoffmembran heranzukommen und zu versuchen, diese zu öffnen. In vielen Fällen gestaltet sich dieses als äußerst schwierig und langwierig.

Ausgehend von dem vorstehend diskutierten Stand der Technik liegt der Erfindung die Aufgabe zugrunde, eine Installationsdose der eingangs genannten Art dergestalt weiterzubilden, dass die Einrichtung eines Verbindungstunnels zu einer zweiten Installationsdose, insbesondere nach erfolgter Installation und Bestückung vereinfacht ist, vor allem ohne eine Deinstallation von darin bereits installierter elektrischer/elektronischer Komponenten vornehmen zu müssen.

Diese Aufgabe wird erfindungsgemäß durch eine eingangs genannte, gattungsgemäße Installationsdose mit den Merkmalen des Anspruchs 1 gelöst.

Bei dieser Installationsdose ist die eine Installationsöffnung verschließende Weichkunststoffmembran doseninnenseitig mit einer Öffnungshandhabe ausgestattet. Die Öffnungshandhabe ist an die Weichkunststoffmembran angeformt. Diese dient zum Öffnen oder Entfernen der Weichkunststoffmembran von einer Installationsöffnung vom Doseninneren her. Diese Öffnungshandhabe erlaubt es, den durch die Weichkunststoffmembran bereitgestellten Verschluss einer solchen Installationsöffnung auch dann problemlos entfernen zu können, wenn die Installationsdose bereits montiert und mit elektrischen/elektronischen Komponenten bestückt ist.

Die Öffnungshandhabe ist ausgelegt, manuell und/oder mittels eines Werkzeuges, beispielsweise der Klinge eines Schlitzschraubendrehers geöffnet zu werden, indem über die Öffnungshandhabe auf die Weichkunststoffmembran Kräfte wirken, damit diese zum Durchschieben der Verbindungsrohrstückes geöffnet oder von dem Dosenkörper vollständig entfernt werden kann.

Die bei der Würdigung des Standes der Technik aufgezeigte Problematik existiert bereits solange Dosenkörper derartiger Installationsdosen mit einer Kunststoffmembran verschlossene Installationsöffnungen aufweisen. Umso überraschender war es, dass dieses sich seit vielen Jahren stellende Problem durch die beanspruchte Installationsdose mit recht einfachen Mitteln jedoch wirksam und ohne nennenswerte Mehrkosten gelöst werden konnte.

Die Öffnungshandhabe weist eine Eintauchkontur auf. Die Eintauchkontur dient zur Aufnahme eines Werkzeuges, beispielsweise des Endes der Klinge eines Schlitzschraubendrehers, sodass dann mit dem in die Eintauchkontur eingesetzten Werkzeug mit einer entsprechenden Werkzeugbewegung die die Installationsöffnung verschließende Weichkunststoffmembran geöffnet oder insgesamt entfernt werden kann. Von Vorteil einer solchermaßen ausgelegten Öffnungshandhabe ist, dass diese mit einem Werkzeug, wie beispielsweise einem Schraubendreher leicht erreichbar ist und mit diesem andere Kräfte zum Öffnen oder Entfernen der Weichkunststoffmembran zum Freilegen der Installationsöffnung aufgebracht werden können. Dieses gilt nicht nur in Bezug auf die mit einem solchen Werkzeug anlegbare Kraft von ihrer Höhe her, sondern auch in Bezug auf die Kraftrichtung. Mit einem beispielsweise als Schraubendreher ausgelegten Werkzeug kann über die Eintauchkontur der Öffnungshandhabe auch eine drehende Kraft auf die Weichkunststoffmembran aufgebracht werden, sodass mit sukzessivem Drehen an den in Drehrichtung weisenden Anschlussbereichen der Weichkunststoffmembran an den Dosenkörper hohe Kräfte zum Einreißen derselben oder zum Lösen derselben von dem Dosenkörper aufbringbar sind. Neben drehenden Kräften können auch Hebelkräfte eingebracht werden, wenn ein solches Werkzeug beispielsweise auf dem die Montageöffnung einfassenden Rand des Dosenkörpers abgestützt ist. Je nach Ausgestaltung des Dosenkörpers ist es auch möglich, eine solche Weichkunststoffmembran von der Installationsöffnung durch eine Drückbewegung des Werkzeuges in Richtung zum Boden des Dosenkörpers zu entfernen. Von besonderem Vorteil bei einem solchen Werkzeug ist, dass es sich hierbei um ein Werkzeug handeln kann, welches von einem Installateur regelmäßig mitgeführt wird. Des Weiteren stören in der Installationsdose bereits verbaute elektrische/elektronische Komponenten das wandnahe Einschieben eines solchen Werkzeuges zum Erreichen der Eintauchkontur nicht.

Gemäß einer Ausgestaltung einer solchen Eintauchkontur ist diese schlitzförmig ausgeführt, um das Ende der Klinge eines Schlitzschraubendrehers darin einführen zu können und diese dann drehmomentschlüssig in der Eintauchkontur aufgenommen ist. Damit eine solche Öffnungshandhabe mit Eintauchkontur nur eine möglichst geringe Einbautiefe in Richtung zum Dosenkörperinneren hat, ist einer Ausführung einer solchen schlitzförmigen Eintauchkontur vorgesehen, dass die Erstreckung des Schlitzes parallel zur flächigen Erstreckung der Weichkunststoffmembran verläuft und somit quer zur Tiefe der Eintauchkontur.

Eine solche Eintauchkontur ist von einem Flächenabschnitt der Weichkunststoffmembran an einer Seite eingefasst. Diesem Flächenabschnitt zum Dosenkörperinneren und zumindest bereichsweise von diesem Flächenabschnitt beanstandet, befindet sich eine Frontplatte. Diese ist mittels zweier Seitenteile bzw. Seitenschenkel mit der Weichkunststoffmembran verbunden. Sämtliche Bestandteile sind typischerweise einstückig mit der Weichkunststoffmembran hergestellt und aus demselben Material. Die Eintauchkontur ist bei dieser Ausgestaltung von dem Flächenabschnitt der Weichkunststoffmembran, der Frontplatte und den beiden Seitenteilen eingefasst. Die Frontplatte geht mit ihrem unteren Ende in den Flächenabschnitt der Weichkunststoffmembran über. Dieser Übergangsbereich stellt einen Wurzelbereich dar, in dem die Weichkunststoffmembran mit der daran angeformten innenseitigen Öffnungshandhabe verbunden ist. Dieser Wurzelbereich erstreckt sich über einen gewissen Abschnitt der Weichkunststoffmembran bezogen auf ihren die Installationsöffnung überspannenden Bereich. In Richtung der Längserstreckung der Öffnungshandhabe kann der Wurzelbereich etwa 15 bis 30 % des Durchmessers der Installationsöffnung einnehmen. Durchaus möglich ist bei dieser Konzeption der Öffnungshandhabe auch ein Wurzelbereich mit einer größeren Erstreckung. Der Wurzelbereich ist gemäß einem bevorzugten Ausführungsbeispiel von dem Rand der Installationsöffnung zur Ausbildung einer Solleinreißstelle geringfügig beabstandet. Die Eintauchkontur ist bei einer solchen Auslegung unterseitig verschlossen. In einer anderen Ausgestaltung ist vorgesehen, dass die Eintauchkontur durchgängig ist, mithin die Eintauchkontur unterseitig nicht an den Flächenabschnitt der Weichkunststoffmembran angeformt ist. Dann ist die Frontplatte nur über die beiden Seitenteile mit dem Flächenabschnitt der Weichkunststoffmembran verbunden. Bei einem Hebeln beim Abstützen des in die Eintauchkontur eingesetzten Werkzeuges an dem die Montageöffnung des Dosenkörpers einfassenden Rand oder auch beim Drehen des Werkzeuges wirken die Kräfte vor allem auch auf die Frontplatte. Die Anbindung der Frontplatte über die beiden Seitenteile bewirkt eine Kraftkonzentration der auf die Frontplatte einwirkenden Kräfte auf den Flächenabschnitt der Weichkunststoffmembran. Dieses kann ein Ein- oder Abreißen der Weichkunststoffmembran begünstigen. Bei einer Auslegung der Öffnungshandhabe unter Ausbildung eines Wurzelbereiches zusammen mit der Weichkunststoffmembran wirkt der Wurzelbereich als Drehlager, wodurch bei einer durch ein Werkzeug induzierten Aufhebelbewegung der an den Wurzelbereich grenzende Randbereich der Kunststoffmembran in Richtung zur Außenseite des Dosenkörpers und der diesem Randbereich bezüglich der Installationsöffnung gegenüberliegende Randbereich der Weichkunststoffmembran in Richtung zum Doseninneren bewegt werden, sodass die Weichkunststoffmembran an zwei gegenüberliegenden Seiten initial einreißt. Unterstützt wird dieses durch die die Frontplatte mit der Kunststoffmembran verbindenden Seitenteile der Frontplatte, auf die durch das Werkzeug ein in radiale Richtung zum Doseninneren hin gerichtetes Kraftmoment wirkt.

Gemäß einer Ausgestaltung der Auslegung einer Öffnungshandhabe mit Eintauchkontur ist der diese begrenzende Flächenabschnitt der Weichkunststoffmembran in einer größeren Materialstärke gefertigt als die übrigen, daran angrenzenden Flächenbereiche der Weichkunststoffmembran. Dieses verleiht der Eintauchkontur eine gewisse Formstabilität. Dieses unterstützt und begünstigt den Einreiß- bzw. Öffnungsprozess, da dann in die Eintauchkontur bzw. die diese einfassenden Bestandteile der Weichkunststoffmembran mit ihrer Öffnungshandhabe formstabiler sind und die aufgebrachte Kraft in die diesbezüglich nachgiebigeren Flächenbereiche der Weichkunststoffmembran gelangt, und zwar dorthin, wo der Öffnungsprozess stattfinden soll.

Zum definierten Öffnen der Installationsöffnung kann die Weichkunststoffmembran auch eine Materialschwächung aufweisen, beispielsweise eine umfängliche Materialausdünnung. Über die Öffnungshandhabe eingeleitete Kräfte führen dann zu einem Ein- und Aufreißen der Einreißkontur bis die Weichkunststoffmembran geöffnet ist. Insofern bildet eine solche Einreißkontur eine Sollbruchstelle.

Eine Sollbruchstelle kann auch über die Bemessung der Größe der Kontaktfläche, mit der die Weichkunststoffmembran an den Dosenkörper angeschlossen ist, bereitgestellt sein. Dieser Übergang ist prädestiniert, als Sollbruchstelle zu dienen, und zwar allein aufgrund des signifikanten Elastizitätskontrastes zwischen der Weichkunststoffmembran und dem aus einem Hartkunststoff gefertigten Dosenkörper. Auf die Kontaktfläche wirkenden Kräfte, seien es Zugkräfte, Schubkräfte oder Scherkräfte führen zu einem definierten Abreißen der Weichkunststoffmembran von dem Dosenkörper. Bei einer solchen Ausgestaltung kann vorgesehen sein, dass ein oder mehrere Abschnitte in Umfangsrichtung der Weichkunststoffmembran gesehen, mit einer größeren Kontaktfläche an dem Dosenkörper angeschlossen sind als andere. Auf diese Weise kann eine Rissinitialisierungsstelle bzw. ein Rissinitialisierungsabschnitt ausgebildet werden. Hat eine Rissbildung begonnen, ist die für die Fortpflanzung des Risses zum Öffnen bzw. Entfernen der Weichkunststoffmembran benötigte Kraft geringer. Zudem ist der Weg der Rissausbreitung vorgezeichnet. Gemäß einem Ausführungsbeispiel dient in einem ersten, in Umfangsrichtung gesehenen Abschnitt die Mantelfläche der Weichkunststoffmembran als Kontaktfläche, während in einem zweiten, dem ersten Abschnitt in Bezug auf den Durchmesser der Installationsöffnung gegenüberliegenden Abschnitt die Weichkunststoffmembran mit ihrer zum Doseninneren weisenden Seite an die dosenaußenseitige Installationsöffnungseinfassung des Dosenkörpers angeschlossen ist. Bei einer solchen Ausgestaltung ist die nach innen gerichtete Oberfläche des Dosenkörpers gestuft ausgeführt.

In einer Weiterbildung einer solchen Installationsdose ist vorgesehen, dass die die Installationsöffnung verschließende Weichkunststoffmembran auch außenseitig eine Öffnungshandhabe trägt. Diese wird man benutzen, wenn die Installationsöffnung geöffnet werden soll, bevor die Installationsdose gebäudeseitig montiert ist. Die außenliegende Öffnungshandhabe kann genauso aufgebaut sein wie die vorbeschriebene vom Doseninneren her zu betätigende Öffnungshandhabe. Die an der Außenseite der Weichkunststoffmembran befindliche Öffnungshandhabe kann über eine Handhabungslasche verfügen, damit ein Öffnen der Installationsöffnung unter Benutzung der außenliegenden Öffnungshandhabe manuell und ohne Werkzeug vorgenommen werden kann. Eine solche Handhabungslasche kann zur Versteifung derselben einen U-förmige Querschnittsgeometrie aufweisen. Verfügt diese über eine Eintauchkontur, kann eine Öffnung bzw. ein Entfernen der Weichkunststoffmembran auch von außen mit einem Werkzeug erfolgen. Die Handhabungslasche ist an die Weichkunststoffmembran außenseitig angeformt, wobei hierzu gemäß Ausführungsbeispiel zwei Seitenschenkel dienen. Durch die Öffnungshandhabe und die Weichkunststoffmembran wird typischerweise eine Werkzeugeintauchkontur bereitgestellt. Eine Kraftübertragung von der Öffnungshandhabe in die Weichkunststoffmembran zum Einreißen bzw. Öffnen derselben kann durch solche Öffnungshandhabe dadurch verbessert werden, dass zwischen einer die Eintauchkontur außenseitig begrenzenden Frontplatte und der Weichkunststoffmembran ein Steg, typischerweise im Bereich der Mitte der Breite der Eintauchkontur angeordnet vorgesehen ist. Eine auf die Öffnungshandhabe einwirkende Öffnungskraft, die radial zum Dosenkörper angelegt wird, begünstigt eine Krafteinleitung zum Ein- und Aufreißen der Installationsöffnung.

Als Weichkunststoffkomponente kann eine solche verwendet werden, wie diese herkömmlich zum Verschließen von Rohreinführungen und Installationsöffnungen verwendet wird. Bei der Installationsdose handelt es sich ebenfalls um eine solche aus einem entsprechenden Hartkunststoff, wie dieser zum Herstellen derartiger Installationsdosen an sich bekannt ist.

Die Erfindung ist nachfolgend anhand von Ausführungsbeispielen unter Bezugnahme auf die beigefügten Figuren beschrieben. Es zeigen:
- **Fig. 1:**: eine perspektivische Ansicht auf eine als Hohlwanddose ausgebildete Installationsdose mit Blickrichtung auf ihre Rückseite,
- **Fig. 2:**: die Installationsdose der Figur 1 aus einer einen Einblick in das Innere der Installationsdose gestattenden Perspektive,
- **Fig. 3:**: eine Ausschnittsvergrößerung einer eine Installationsöffnung verschließenden Weichkunststoffmembran der Installationsdose der Figur 2,
- **Fig. 4:**: eine Schnittdarstellung durch die durch die Weichkunststoffmembran verschlossene Installationsöffnung der Figur 2b,
- **Fig. 5:**: eine perspektivische Außenansicht einer weiteren als Hohlwanddose ausgebildeten Installationsdose,
- **Fig. 6:**: eine Einsicht in die Installationsdose der Figur 4 im Bereich einer durch eine Weichkunststoffmembran verschlossenen Installationsöffnung,
- **Fig. 7:**: eine Schnittdarstellung durch die Installationsdose der Figur 5 im Bereich einer durch eine Weichkunststoffmembran verschlossenen Installationsöffnung,
- **Fig. 8:**: einen Ausschnitt auf die Außenseite einer weiteren Installationsdose mit einer durch eine Weichkunststoffmembran verschlossenen Installationsöffnung und einer daran angeformten außenseitigen Öffnungshandhabe,
- **Fig. 9:**: eine Draufsicht auf den Ausschnitt der Installationsdose der Figur 8 von oben mit der außenseitigen Öffnungshandhabe und
- **Fig. 10:**: eine Schnittdarstellung entsprechend derjenigen der Figur 7 durch die Weichkunststoffmembran des Ausführungsbeispiels der Figuren 9 und 10 mit seiner innenseitigen und seiner außenseitigen Öffnungshandhabe.

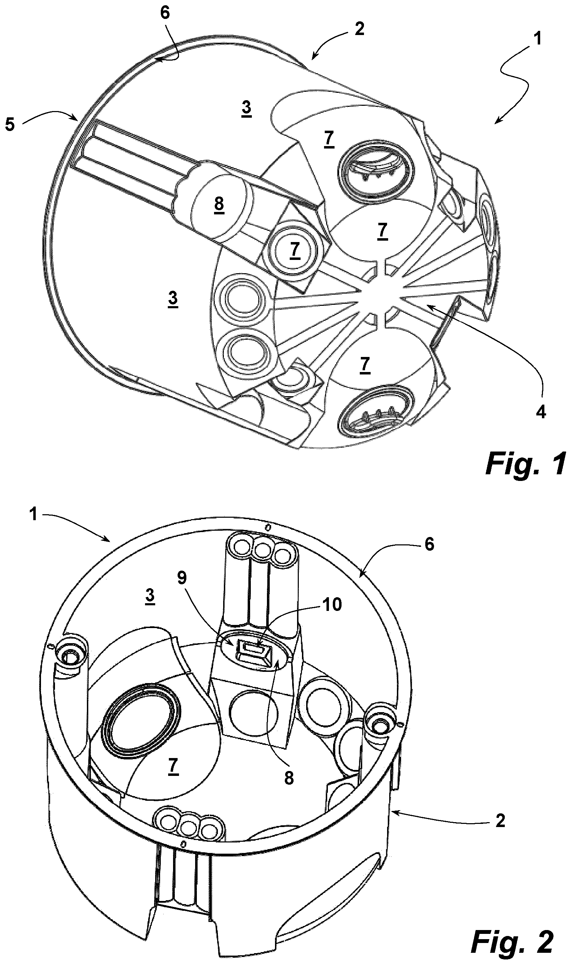

Eine Hohlwanddose 1 als beispielhafte Installationsdose zur Aufnahme von elektrischen/elektronischen Installationsgeräten, wie etwa einer Steckdose, eines Geräteträgers, einer Schalteinrichtung oder dergleichen umfasst einen Dosenkörper 2. Bei dem dargestellten Ausführungsbeispiel wird der Dosenkörper 2 durch eine umlaufende zylindrische Wand 3 und einen Boden 4 gebildet. Dem Boden 4 gegenüberliegend verfügt der Dosenkörper 2 über eine in Figur 1 auf Grund der Perspektive nicht erkennbare Montageöffnung 5, durch die die gewünschten Installationen in die Hohlwanddose 1 eingebracht werden können. An den Dosenkörper 2 ist, die Montageöffnung 5 einfassend, in radialer Richtung nach außen ein Stützflansch 6 angeformt. Der Dosenkörper 2, soweit vorstehend beschrieben, ist aus einem Hartkunststoff, typischerweise aus einem thermoplastischen Kunststoff hergestellt. Dieser stellt zugleich die notwendige elektrische Isolierung zwischen dem Innenraum des Dosenkörpers 2 und seiner Außenseite dar. Der Boden 4, wozu auch der geneigte, den Boden 4 mit der Seitenwand 3 verbindende Abschnitt zählt, verfügt über mehrere, als Durchbrechungen in den Dosenkörper 2 eingebrachte Rohreinführungen. Diese sind in Figur 1 nicht erkennbar, da jeweils von einer Weichkunststoffmembran überspannt. In Figur 1 sind nur einige der mehreren, eine Rohreinführung überspannenden Weichkunststoffmembranen mit dem Bezugszeichen 7 kenntlich gemacht. Aus herstellungstechnischen Gründen sind die Weichkunststoffmembranen 7 über Angusskanäle miteinander verbunden. Bei dem Weichkunststoff und den von diesem gebildeten Weichkunststoffmembranen 7 handelt es sich um einen elastomeren Weichkunststoff, wie dieser bei Installationsdosen der in Rede stehenden Art bekannt ist. Die Hohlwanddose 1 ist als Zweikomponentenspritzgussteil gefertigt. In einem ersten Schritt ist der aus Hartkunststoff bestehende Dosenkörper 2 urgeformt worden. In einem nachfolgenden Schritt ist die Weichkunststoffkomponente an den Dosenkörper 2 in einem entsprechenden Werkzeug angeformt worden.

Die Hohlwanddose 1 verfügt des Weiteren über Installationsöffnungen, die ebenso wie die vorbeschriebenen Rohreinführungen mit einer Weichkunststoffmembran 8 verschlossen sind. Die Installationsöffnungen dienen, wenn die Weichkunststoffmembran 8 entfernt ist, zum Einführen eines Verbindungsrohrstückes von der Doseninnenseite her zum Ausbilden eines Verbindungstunnels zu einer benachbart zu der Installationsdose 1 angeordneten zweiten Installationsdose. Die Installationsdose 1 des dargestellten Ausführungsbeispiels verfügt über zwei einander diametral gegenüberliegende Installationsöffnungen, die jeweils durch eine Weichkunststoffmembran 8 verschlossen sind. Die Installationsöffnungen befinden sich in einem ungekrümmten Wandabschnitt der Installationsdose 1, dessen Wandaußenseite parallel zur Längsachse der Installationsdose 1 verläuft. Eine solche Installationsdose kann durchaus auch mehrere, durch jeweils eine Weichkunststoffmembran verschlossene Installationsöffnungen aufweisen.

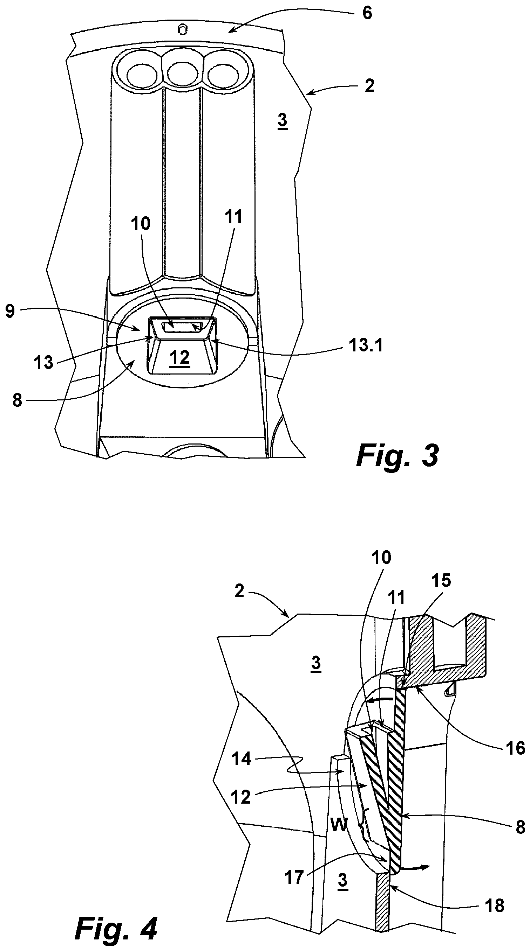

Um einen Verbindungstunnel zwischen der Installationsdose 1 und einer weiteren Installationsdose auszubilden, ist zuvor die Weichkunststoffmembran 8 zu entfernen, sodass ein den Verbindungstunnel bildendes Verbindungsrohrstück durch die dann offene Installationsöffnung hindurchgeschoben werden kann. Von Besonderheit bei der Installationsdose 1 ist, dass wie aus den Figuren 2 und 3 ersichtlich, die Weichkunststoffmembran 8 doseninnenseitig eine Öffnungshandhabe 9 trägt. Die Öffnungshandhabe 9 dient zum erleichterten Entfernen der Weichkunststoffmembran 8. Die Öffnungshandhabe 9 verfügt über eine Eintauchkontur 10, die bei dem dargestellten Ausführungsbeispiels als Schlitzkontur ausgeführt ist. Die Langachse der schlitzförmigen Eintauchkontur 10 verläuft parallel zur flächigen Erstreckung der Weichkunststoffmembran 8. Die Öffnungshandhabe 9 ist an die Weichkunststoffmembran 8 angeformt und aus demselben Material wie diese hergestellt. Eingefasst ist die schlitzartige Eintauchkontur 10 von einem Flächenabschnitt 11 der Weichkunststoffmembran 8, einer dem Flächenabschnitt 11 gegenüberliegenden Frontplatte 12 und zwei Seitenteilen 13, 13.1, mit denen die Frontplatte 12 mit dem Flächenabschnitt 11 verbunden ist. Bei dem dargestellten Ausführungsbeispiel geht das untere Ende der Frontplatte 12 in den Flächenabschnitt 11 über. Der Flächenabschnitt 11 weist eine gegenüber der Materialstärke der übrigen Bestandteile der Weichkunststoffmembran 8 größere Materialstärke auf (siehe Figur 3). Das Innere der Eintauchkontur 10 verjüngt sich ausgehend von seiner oberen Werkzeugaufnahmeöffnung und ist unterseitig geschlossen.

Die Frontplatte 12 ist an die Weichkunststoffmembran 8 unter Ausbildung eines Wurzelbereiches W angeformt (siehe Figur 4). Der Wurzelbereich W, in dem die Frontplatte 12 in die Weichkunststoffmembran 8 bzw. den materialverdickten Flächenabschnitt 11 übergeht, versteift die Weichkunststoffmembran 8 in diesem Bereich.

Die Öffnungshandhabe 9 mit ihrer Eintauchkontur 10 dient zur Aufnahme des Endes eines Schlitzschraubendrehers als Werkzeug zum Entfernen der Weichkunststoffmembran 8 zum Öffnen der durch diese verschlossenen Installationsöffnung. Dieser kann, wie aus Figur 2 erkennbar, unmittelbar entlang der Innenseite der Wand 3 des Dosenkörpers 2 eingeführt werden. Entfernt werden kann die Weichkunststoffmembran 8 durch Drehen des Schraubendrehers und/oder durch Ausüben einer umfänglichen Zugkraft durch Aufhebeln der Weichkunststoffmembran, wenn der Schraubendreher an dem oberen Abschluss des Dosenkörpers 2 mit seiner Klinge abgestützt ist und/oder durch Ausüben einer zum Boden 4 des Dosenkörpers 2 hingerichteten Drück-Bewegung. Durch den Schraubendreher wird eine ausreichende Kraft auf die Weichkunststoffmembran 8 ausgeübt, damit diese von dem Dosenkörper 2 bzw. der Einfassung der Installationsöffnung abreißt.

Ein definiertes Öffnen der Weichkunststoffmembran 8 ist mittels eines Werkzeuges, wie etwa eines Schlitzschraubendrehers auch ohne dosenkörperseitige Abstützung möglich, und zwar indem der Schraubendreher ins Doseninnere hinein verschwenkt wird, wenn sein Klingenende in die Eintauchkontur 10 eingesetzt ist. Dann wirkt der relativ steifere Wurzelbereich W als Drehpunkt. Dieses bewirkt, dass der in Figur 4 untere Randbereich der Weichkunststoffmembran 8 in Richtung zur Außenseite des Dosenkörpers 2 und der gegenüberliegende Randbereich in Richtung zum Doseninneren, wie in Figur 4 durch die Pfeile angedeutet, verstellt wird. Die Kraftübertragung auf den in Figur 4 gezeigten oberen Randbereich wird unterstützt durch die Seitenteile 13, 13.1, mit denen die Frontplatte 12 an die Weichkunststoffmembran 8 angeformt ist und bei dem dargestellten Ausführungsbeispiel auch durch die Verdickung in dem Flächenabschnitt 11.

Bei dem in den Figuren dargestellten Ausführungsbeispiel ist der zu dem in Figur 4 nach unten weisende Abschluss des Wurzelbereichs W gerade ausgeführt. In einer anderen Ausgestaltung ist dieser, der Kontur der Installationsöffnung folgend, gekrümmt. Eine solche Ausgestaltung begünstigt die Krafteinleitung in den unteren Scheitel des die kreisrunde Installationsöffnung Bereiches der Weichkunststoffmembran 8 zum Abreißen dieses Randbereiches von der Außenseite der Wand 3.

Von besonderem Vorteil ist, dass die Weichkunststoffmembran 8 des dargestellten Ausführungsbeispiels ohne Weiteres zum Öffnen der Installationsöffnung von dem Dosenkörper 2 entfernt werden kann, auch wenn die Installationsdose 1 bereits wand- oder deckenseitig installiert und das Innere des Dosenkörpers 2 mit elektrischen/elektronischen Komponenten bestückt ist und diese verdrahtet sind. Innerhalb des Dosenkörpers 2 braucht nur ein solcher Installationsraum zur Verfügung zu stehen, dass das zum Ausbilden des Verbindungstunnels vorgesehene Verbindungsrohrstück von innen durch die Verbindungsöffnung hindurchgesteckt werden kann. Handelt es sich bei der Installationsdose 1 um diejenige, die das freie Ende eines Verbindungsrohrstückes zu empfangen hat, da dieses in der zweiten Installationsdose gehalten ist, braucht innerhalb des Doseninneren zum Entfernen der Weichkunststoffmembran 8 nur so viel Raum vorhanden zu sein, dass die Weichkunststoffmembran 8 mittels eines Schraubendrehers entfernt werden kann.

Figur 4 zeigt die Weichkunststoffmembran 8 mit ihrer Öffnungshandhabe 9 in einer Schnittdarstellung. Diese verschließt eine bei dem dargestellten Ausführungsbeispiel gestuft ausgebildete Installationsöffnung 14. Bei dem dargestellten Ausführungsbeispiel wird die Installationsöffnung 14 durch Entfernen der Weichkunststoffmembran 8 geöffnet, und zwar dadurch, dass diese durch entsprechende Betätigung der Öffnungshandhabe 9 von den die Installationsöffnung 14 einfassenden Lochrandbereichen des Dosenkörpers 2 entfernt wird. Bei diesem Ausführungsbeispiel ist die Kontaktfläche zwischen der Weichkunststoffmembran 8 und dem Dosenkörper 2 in Umfangsrichtung der Weichkunststoffmembran 8 gesehen unterschiedlich. Während in der in Figur 4 gezeigten oberen Hälfte die Weichkunststoffmembran 8 mit ihrer Mantelfläche 15 an der Innenwandung 16 der Installationsöffnung 14 anliegt und mit dieser verbunden ist, liegt die Weichkunststoffmembran 8 mit ihrer unteren Hälfte mit einem schmalen Randabschnitt ihrer zum Doseninneren weisenden Seite 17 an der Außenseite 18 des Dosenkörpers 2 an. Die Kontaktfläche ist, wie aus Figur 4 erkennbar, in der oberen Hälfte der Weichkunststoffmembran 8 größer als in demjenigen Abschnitt, in dem diese an der Außenseite 18 des Dosenkörpers 2 anliegt und mit diesem verbunden ist. Durch die in Umfangsrichtung der Weichkunststoffmembran 8 gesehen bezüglich ihrer Größe unterschiedlichen Kontaktflächenabschnitte, beginnt ein Abriss der Weichkunststoffmembran 8 von dem Dosenkörper 2 an derjenigen Stelle bzw. demjenigen Abschnitt mit der kleineren Kontaktfläche.

Bei dem dargestellten Ausführungsbeispiel ist zwischen den beiden vorbeschriebenen Kontaktflächenabschnitten ein Versatz vorhanden. Durch den Versatz des Dosenkörpers 2, der erforderlich ist, um einen Verschluss der Installationsöffnung 14, wie in Figur 4 gezeigt, zu ermöglichen, besteht die Möglichkeit, die Weichkunststoffmembran 8 auch durch eine translatorische Bewegung in Richtung zum Boden 4 der Installationsdose 1 aus der Installationsöffnung 14 zu entfernen. Die notwendige Stellbewegung und Stellkraft kann mittels eines in die Eintauchkontur 10 eingesetzten Schraubendrehers bereitgestellt werden.

Unabhängig davon, mit welcher Bewegung die Weichkunststoffmembran 8 aus der Installationsöffnung 14 entfernt worden ist, kann diese aufgrund des vorbeschriebenen Versatzes bei installierter Installationsdose 1 au-βenseitig bezüglich des Dosenkörpers 2 verbleiben, stört somit eine Verdrahtung oder eine Montage von elektrischen/elektronischen Komponenten innerhalb des Dosenkörpers 2 nicht.

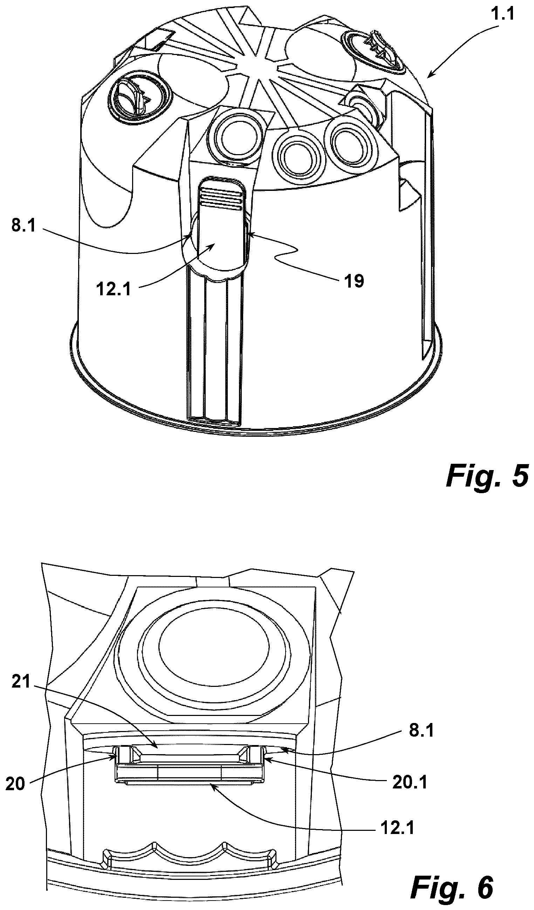

Figur 5 zeigt eine weitere Installationsdose 1.1, die gleich aufgebaut ist wie die Installationsdose 1 der vorbeschriebenen Figuren, sodass die vorstehenden Ausführungen gleichermaßen für die Installationsdose 1.1 gelten. Die Installationsdose 1.1 unterscheidet sich lediglich von der voranstehend beschriebenen Installationsdose 1 dadurch, dass an die eine Installationsöffnung verschließende Weichkunststoffmembran 8.1 auch außenseitig eine Öffnungshandhabe 19 angeformt ist. Diese ist als Handhabungslasche ausgebildet und kann, wenn gewünscht, mit zwei Fingern ergriffen werden, um die Weichkunststoffmembran 8.1 zum Öffnen der Installationsöffnung zu entfernen. Ein Entfernen der Weichkunststoffmembran 8.1 mittels der Öffnungshandhabe 19 erfolgt vor dem Einbau der Installationsdose 1.1.

Die Öffnungshandhabe 19 ist prinzipiell ähnlich aufgebaut wie die innenseitige Öffnungshandhabe 9.1 und unterscheidet sich bezüglich der Auslegung ihrer Frontplatte 12.1 durch die vorbeschriebene Auslegung derselben als manuelle Handhabe. Die Frontplatte 12.1 (siehe Figur 6) fasst zusammen mit der Weichkunststoffmembran 8.1 und zwei Seitenteilen 20, 20.1 ebenfalls eine Eintauchkontur 21 ein. Diese ist im Unterschied zu der Eintauchkontur 10.1 der innenseitigen Öffnungshandhabe 9.1 unterseitig geöffnet. Damit kann die Weichkunststoffmembran 8.1 auch unter Verwendung eines Werkzeuges, beispielsweise eines Schlitzschraubendrehers zum Öffnen der Installationsöffnung entfernt werden.

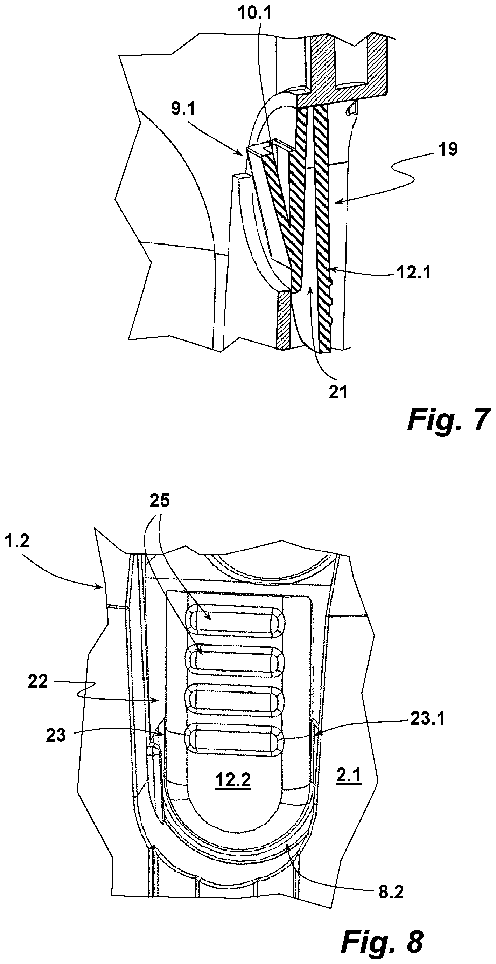

Die Schnittdarstellung der Figur 7 zeigt die Weichkunststoffmembran 8.1 mit ihrer an der zum Doseninneren Seite angeformten Öffnungshandhabe 9.1 und ihrer außenseitig angeformten Öffnungshandhabe 19. Die Werkzeugaufnahmeöffnung der jeweiligen Eintauchkontur 10 bzw. 21 ist bei den beiden Öffnungshandhaben 9.1 und 19 in entgegengesetzte Richtungen weisend.

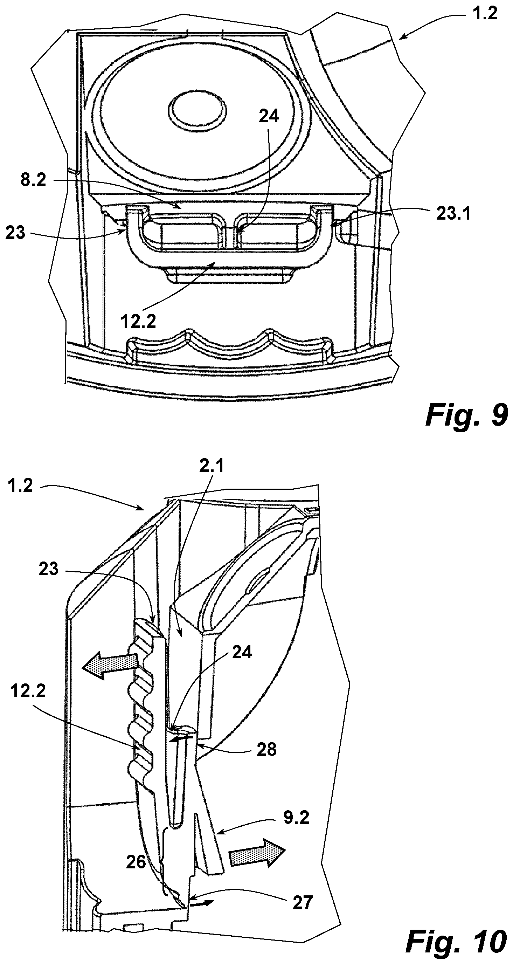

Die Figur 8 zeigt in einem Ausschnitt eine weitere Installationsdose 1.2 mit einer durch eine Weichkunststoffmembran 8.2 verschlossenen Installationsöffnung. Außenseitig ist an der Weichkunststoffmembran 8.2 ebenso wie bei dem Ausführungsbeispiel der Figuren 5 bis 7 eine außenseitige Öffnungshandhabe 22 angeformt. Die Öffnungshandhabe 22 umfasst eine Frontplatte 12.2 mit daran angeformten Schenkeln 23, 23.1 (s. auch Figur 9). Die Schenkel 23, 23.1 erstrecken sich im Wesentlichen über die gesamte Länge der Frontplatte 12.2 in vertikaler Richtung in ihrer Darstellung gemäß Figur 8. Durch die an die Frontplatte 12.2 angeformten Schenkel 23, 23.1 weist diese Öffnungslasche eine U-förmige Querschnittsgeometrie auf. Die Schenkel 23, 23.1 sind in dem Figur 8 erkennbaren unteren Abschnitt der Frontplatte 12.2 an die Weichkunststoffmembran 8.2 angeformt. In diesem Abschnitt wird somit durch die Frontplatte 12.2 und die Weichkunststoffmembran 8.2 eine Eintauchkontur für ein Werkzeug bereitgestellt. Das Ausführungsbeispiel der Figuren 8 bis 10 unterscheidet sich von demjenigen der Figuren 5 bis 7 dadurch, dass die Frontplatte 12.2 zusätzlich durch einen Steg 24 mit der Weichkunststoffmembran 8.2 verbunden ist. Der Steg 24 befindet sich mittig im Bezug auf die Breite der Eintauchkontur. Durch den Steg 24 ist die Eintauchkontur in zwei Eintauchkonturabschnitte unterteilt. Die Breite des Steges 24 kann in Richtung zum unteren Abschluss der Eintauchkontur hin zunehmen.

Der für ein manuelles Ergreifen vorgesehene Abschnitt der Frontplatte 12.2 - die Öffnungslasche - trägt außenseitig eine Griffkontur, die bei dem dargestellten Ausführungsbeispiel durch quer verlaufende Wülste 25 bereitgestellt ist. Durch die U-förmige Profilierung der Öffnungshandhabe ist diese auch in demjenigen Abschnitt, mit dem deren Schenkel 23, 23.1 nicht an die Weichkunststoffmembran 8.2 angeformt sind, steifer. Daher werden in radialer Richtung wirkende Zugkräfte wirksam zum Einreißen bzw. Ausreißen der Weichkunststoffmembran 8.2 aus der Installationsöffnung umgesetzt.

Unterstützt wird die Krafteinleitung zum Öffnen der Installationsöffnung im Dosenkörper zudem dadurch, dass die Frontplatte 12.2 sich unterseitig, wie aus Figur 8 erkennbar, bis an den Rand der Weichkunststoffmembran 8.2 erstreckt und auch der Umrissgeometrie derselben und damit der Umrissgeometrie der Installationsöffnung folgt.

Aus der Schnittdarstellung der Figur 10 wird deutlich, dass bei diesem Ausführungsbeispiel die Frontplatte 12.2 an die Weichkunststoffmembran 8.2 über einen Wurzelbereich 26 angeformt ist. Durch die Materialansammlung in dem Wurzelbereich 26 ist die Weichkunststoffmembran 8.2 in diesem Bereich steifer als in dem darüber liegenden Bereich und dem darunter liegenden Randabschnitt. Dieses hat mehrere Vorteile. Zum Einen gewährleistet der Wurzelbereich 26, dass eine auf die Frontplatte 12.2 einwirkende Öffnungskraft (in Figur 10 der obere nach links gerichtete Blockpfeil), die in radialer Richtung von dem Dosenkörper 2.1 weggerichtet wirkt, dass diese in den Randbereich 27, der zu diesem Zweck bei dem dargestellten Ausführungsbeispiel eine geringere Materialstärke aufweist, weitergeleitet wird und ein definiertes Aufreißen am Rand der Weichkunststoffmembran 8.2 bewirkt wird. Bei dem dargestellten Ausführungsbeispiel ist die radiale Mantelfläche der Weichkunststoffmembran 8.2 im Randbereich 27 an den Dosenkörper 2.1 angeschlossen. Die an die Weichkunststoffmembran 8.2 angeformten Schenkel 23, 23.1 und der Steg 24 sorgen für eine Kraftweiterleitung bis an den in Figur 10 oberen Randbereich 28 der Weichkunststoffmembran 8.2, um diese von der Außenseite des Dosenkörpers 2.1 abzureißen. Zugleich bewirkt eine solche Abstützung der Spitze eines Schraubendrehers an dem Wurzelbereich 26, dass auf diesen auf den unteren Randbereich 27 ein in Richtung zum Doseninneren wirkendes Moment wirkt, sodass auch auf den Randbereich 27 eine Einreißkraft wirkt. Die Kunststoffmembran 8.2 wird dann gleichzeitig vom oberen und unteren Rand her eingerissen.

Der Wurzelbereich 26 bringt auch Vorteile bei einer Verwendung der innenseitigen Öffnungshandhabe 9.2, wenn diese mittels eines darin eingesetzten Werkzeuges, beispielsweise eines Schlitzschraubendrehers zum innenseitigen Öffnen der Installationsöffnung betätigt werden soll (in Figur 10 der untere nach rechts gerichtete Blockpfeil). Dann bildet der Wurzelbereich 26 ein wirksames Widerlager, an dem ein diese Öffnungshandhabe 9.2 in radialer Richtung nach innen drückender Schraubendreher abgestützt ist, sodass auch dann ein in entgegengesetzte Richtungen wirkendes Kraftmoment im unteren bzw. oberen Randbereich 27, 28 anliegt.

Die Erfindung ist anhand von Ausführungsbeispielen beschrieben. Ohne den Umfang der geltenden Ansprüche zu verlassen, ergeben sich für einen Fachmann zahlreiche weitere Ausgestaltungen, die Erfindung im Rahmen der geltenden Ansprüche umzusetzen, ohne dass dieses im Einzelnen näher im Rahmen dieser Ausführungen dargelegt werden müsste.

### Bezugszeichenliste

- 1, 1.1, 1.2: Hohlwanddose
- 2,2.1: Dosenkörper
- 3: Wand
- 4: Boden
- 5: Montageöffnung
- 6: Stützflansch
- 7: Weichkunststoffmembran
- 8, 8.1, 8.2: Weichkunststoffmembran
- 9, 9.1: Öffnungshandhabe
- 10, 10.1: Eintauchkontur
- 11: Flächenabschnitt
- 12, 12.1, 12.2: Frontplatte
- 13, 13.1: Seitenteil
- 14: Installationsöffnung
- 15: Mantelfläche
- 16: Innenwandung
- 17: Seite
- 18: Außenseite
- 19: Öffnungshandhabe
- 20,20.1: Seitenteil
- 21: Eintauchkontur
- 22: Öffnungshandhabe
- 23, 23.1: Schenkel
- 24: Steg
- 25: Wulst
- 26: Wurzelbereich
- 27: Randbereich
- 28: Randbereich

- W: Wurzelbereich

## Patentansprüche

1. Installationsdose für elektrische und/oder elektronische Installationen mit einem zur Aufnahme zumindest einer elektrischen/elektronischen Komponente dienenden Dosenkörper (2), umfassend einen Boden (4), eine umlaufende Wand (3) und eine Montageöffnung (5), welcher Dosenkörper (2) wenigstens eine durch eine Weichkunststoffmembran (8, 8.1) verschlossene, in der Wand oder, falls vorhanden, einer Übergangsfläche zwischen der Wand (3) und dem Boden (4) befindliche Installationsöffnung (14) aufweist, welche Weichkunststoffmembran (8, 8.1) eine Öffnungshandhabe (9, 9.1) trägt, **dadurch gekennzeichnet, dass** an der zur Doseninnenseite weisenden Seite der Weichkunststoffmembran (8, 8.1) eine Öffnungshandhabe (9, 9.1) zum Öffnen oder Entfernen der Weichkunststoffmembran (8, 8.1) vom Doseninneren her angeformt ist, dass die Öffnungshandhabe (9, 9.1) eine Eintauchkontur (10, 10.1) mit einer zur Montageöffnung (5) des Dosenkörpers (2) weisenden Werkzeugaufnahmeöffnung zur Aufnahme eines Werkzeuges zum Öffnen oder Entfernen der Weichkunststoffmembran (8, 8.1) aufweist und die Eintauchkontur (10, 10.1) von einem Flächenabschnitt (11) der Weichkunststoffmembran (8, 8.1), eine von diesem Flächenabschnitt beabstandete Frontplatte (12) und zwei die Frontplatte (12) mit dem Flächenabschnitt verbindenden Seitenteilen (20, 20.1) eingefasst ist und dass die Frontplatte (12, 12.1) mit ihrem unteren Endabschnitt in den Flächenabschnitt (11) der Weichkunststoffmembran (8, 8.1) übergeht.

2. Installationsdose nach Anspruch 1, **dadurch gekennzeichnet, dass** die Eintauchkontur (10, 10.1) schlitzförmig ausgeführt ist, wobei die Erstreckung des Schlitzes quer zur Tiefe der Eintauchkontur (10, 10.1) und parallel zur flächigen Erstreckung der Weichkunststoffmembran (8, 8.1) verläuft.

3. Installationsdose nach Anspruch 1 oder 2, **dadurch gekennzeichnet, dass** zwischen dem Flächenabschnitt der Weichkunststoffmembran und der Frontplatte die Eintauchkontur durchgängig ist.

4. Installationsdose nach einem der Ansprüche 1 bis 3, **dadurch gekennzeichnet, dass** die Weite der Eintauchkontur (10, 10.1) von ihrer Werkzeugaufnahmeöffnung in Richtung zur Tiefe der Eintauchkontur (10) verjüngt ist.

5. Installationsdose nach einem der Ansprüche 1 bis 4, **dadurch gekennzeichnet, dass** der die Eintauchkontur (10, 10.1) begrenzende Flächenabschnitt (11) der Weichkunststoffmembran (8, 8.1) eine größere Materialstärke aufweist als die daran angrenzenden Flächenbereiche der Weichkunststoffmembran (8, 8.1).

6. Installationsdose nach einem der Ansprüche 1 bis 5, **dadurch gekennzeichnet, dass** sich die Installationsöffnung (14) in einem nicht gekrümmten Teil des Dosenkörpers (2) befindet.

7. Installationsdose nach einem der Ansprüche 1 bis 6, **dadurch gekennzeichnet, dass** auch an der zur Dosenaußenseite weisenden Seite der Weichkunststoffmembran (8.1) eine Öffnungshandhabe (19) zum Öffnen oder Entfernen der Weichkunststoffmembran (8.1) von der Dosenaußenseite her angeformt ist.

8. Installationsdose nach Anspruch 7, **dadurch gekennzeichnet, dass** die außenseitige Öffnungshandhabe (19) eine Eintauchkontur (21) zur Aufnahme eines Werkzeuges aufweist, deren Werkzeugaufnahmeöffnung in die entgegengesetzte Richtung weist wie diejenige der innenseitigen Eintauchkontur (10.1).

9. Installationsdose nach Anspruch 8, **dadurch gekennzeichnet, dass** die Eintauchkontur (21) der außenseitigen Öffnungshandhabe (19) von einem Flächenabschnitt der Weichkunststoffmembran (8.1), eine von diesem Flächenabschnitt beabstandete Frontplatte (12.1) und zwei die Frontplatte (12.1) mit dem Flächenabschnitt verbindenden Seitenteilen (20, 20.1) eingefasst ist.

10. Installationsdose nach Anspruch 8 oder 9, **dadurch gekennzeichnet, dass** die Eintauchkontur der außenseitigen Öffnungshandhabe (22) von einem Flächenabschnitt der Weichkunststoffmembran (8.2) und einer von diesem Flächenabschnitt beabstandeten Frontplatte (12.2) eingefasst ist und dass die Frontplatte (12.2) durch einen Steg (24) mit der Weichkunststoffmembran (8.2) verbunden ist, welcher Steg (24) mittig in Bezug auf die Breite der Eintauchkontur angeordnet ist.

11. Installationsdose nach Anspruch 9 oder 10, **dadurch gekennzeichnet, dass** die Frontplatte (12.2) und die Weichkunststoffmembran (8.2) in einem Wurzelbereich (26) miteinander verbunden sind, welcher Wurzelbereich (26) sich zumindest über 20 % des Durchmessers der durch die Weichkunststoffmembran (8.2) verschlossenen Installationsöffnung erstreckt.

12. Installationsdosenanordnung mit einer Installationsdose nach einem
der Ansprüche 1 bis 11 und mit einem Verbindungsrohrstück, das nach Entfernen der jeweiligen Weichkunststoffmembran (8, 8.1) zum Herstellen eines Verbindungstunnels zwischen dieser Installationsdose und einer weiteren Installationsdose aus Richtung vom Dosenkörperinneren her in zumindest eine der Installationsöffnung (14) einsetzbar ist.

## Claims

1. Installation box for electrical and/or electronic installations, with a box body (2) serving to accommodate at least one electrical/electronic component, comprising a base (4), a circumferential wall (3), and a mounting opening (5), which box body (2) comprises at least one installation opening (14), enclosed by a soft plastic membrane (8, 8.1), located in the wall or, if present, in a transition surface between the wall (3) and the base (4), which soft plastic membrane (8, 8.1) carries an opening handle (9, 9.1), **characterised in that,** on the side of the soft plastic membrane (8, 8.1) facing towards the inner side of the box, an opening handle (9, 9.1) for opening or removing the soft plastic membrane (8, 8.1) is formed projecting from the interior of the box, that the opening handle (9, 9.1) has an immersion contour (10, 10.1), with a tool reception opening facing towards the mounting opening (5) of the box body (2) for receiving a tool for opening or removing the soft plastic membrane (8, 8.1), and the immersion contour (10, 10.1) is enclosed by a surface section (11) of the soft plastic membrane (8, 8.1), a front plate (12) projecting from this surface section, and two side parts (20, 20.1) connecting the front plate (12) to the surface section, and that the front plate (12, 12.1) transfers with its lower end section into the surface section (11) of the soft plastic membrane (8, 8.1).

2. Installation box according to claim 1, **characterised in that** the immersion contour (10, 10.1) is configured in the form of a slot, wherein the extension of the slot runs transverse to the depth of the immersion contour (10, 10.1) and parallel to the flat extension of the soft plastic membrane (8, 8.1).

3. Installation box according to claim 1 or 2, **characterised in that** the immersion contour can pass between the surface section of the soft plastic membrane and the front plate.

4. Installation box according to any one of claims 1 to 3, **characterised in that** the width of the immersion contour (10, 10.1) tapers from its tool reception opening in the direction towards the depth of the immersion contour (10).

5. Installation box according to any one of claims 1 to 4, **characterised in that** the surface section (11) of the soft plastic membrane (8, 8.1) delimiting the immersion contour (10, 10.1) exhibits a greater material thickness than the surface regions of the soft plastic membrane (8, 8.1) adjacent to it.

6. Installation box according to any one of claims 1 to 5, **characterised in that** the installation opening (14) is located in a part of the box body (2) which is not cambered.

7. Installation box according to any one of claims 1 to 6, **characterised in that,** on the side of the soft plastic membrane (8.1) facing towards the outer side of the box, an opening handle (19) is formed, projecting from the outer side of the box, for opening or removing the soft plastic membrane (8.1).

8. Installation box according to claim 7, **characterised in that** the opening handle (19) on the outer side exhibits an immersion contour (21) for receiving a tool, of which the tool reception opening points in the opposite direction to that of the immersion contour (10.1) on the inner side.

9. Installation box according to claim 8, **characterised in that** the immersion contour (21) of the opening handle (19) on the outside is surrounded by a surface section of the soft plastic membrane (8.1), a front plate (12.1) spaced at a distance interval from this surface section, and two side parts (20, 20.1) connecting the front plate (12.1) to the surface section.

10. Installation box according to claim 8 or 9, **characterised in that** the immersion contour of the outside opening handle (22) is enclosed by a surface section of the soft plastic membrane (8.2) and a front plate (12.2) spaced apart from this surface section, and that the front plate (12.2) is connected by a web (24) to the soft plastic membrane (8.2), which web (24) is arranged in the middle in relation to the width of the immersion contour.

11. Installation box according to claim 9 or 10, **characterised in that** the front plate (12.2) and the soft plastic membrane (8.2) are connected to one another in a root region (26), which root region (26) extends at least over 20% of the diameter of the installation opening enclosed by the soft plastic membrane (8.2).

12. Installation box assembly with an installation box according to any one of claims 1 to 11, and with a connection piece, which, after the removal of the respective soft plastic membrane (8, 8.1), can be inserted into at least one of the installation openings (14), from the direction from the interior of the box body, in order to establish a connection tunnel between this installation box and a further installation box.

## Revendications

1. Boîte d'installation pour des installations électriques et/ou électroniques comprenant un corps de boîte (2) servant à loger au moins un composant électrique/électronique, comportant un fond (4), une paroi (3) périphérique et une ouverture de montage (5), lequel corps de boîte (2) présente au moins une ouverture d'installation (14), fermée par une membrane en matière plastique souple (8, 8.1), située dans la paroi ou dans une surface de transition, si elle existe, entre la paroi (3) et le fond (4), laquelle membrane en matière plastique souple (8, 8.1) supporte un moyen d'ouverture (9, 9.1), **caractérisée en ce qu'**un moyen d'ouverture (9, 9.1) est moulé, depuis l'intérieur de la boîte, sur le côté de la membrane en matière plastique souple (8, 8.1) orienté vers l'intérieur de la boîte, afin d'ouvrir ou d'enlever la membrane en matière plastique souple (8, 8.1), **en ce que** le moyen d'ouverture (9, 9.1) présente un contour d'engagement (10, 10.1) avec une ouverture de réception d'outil orientée vers l'ouverture de montage (5) du corps de boîte (2) destinée à y engager un outil afin d'ouvrir ou d'enlever la membrane en matière plastique souple (8, 8.1) et que le contour d'engagement (10, 10.1) est serti par un segment de surface (11) de la membrane en matière plastique souple (8, 8.1), par une plaque frontale (12) à distance de ce segment de surface et deux éléments latéraux (20, 20.1) qui relient la plaque frontale (12) avec le segment de surface, et **en ce que** la plaque frontale (12, 12.1) avec son tronçon d'extrémité inférieur, traverse le segment de surface (11) de la membrane en matière plastique souple (8, 8.1).

2. Boîte d'installation selon la revendication 1, **caractérisée en ce que** le contour d'engagement (10, 10.1) est réalisé à la manière d'une fente, l'étendue de la fente s'étendant perpendiculairement à la profondeur du contour d'engagement (10, 10.1) et parallèlement à l'étendue de surface de la membrane en matière plastique souple (8, 8.1).

3. Boîte d'installation selon la revendication 1 ou 2, **caractérisée en ce que** le contour d'engagement est traversant entre le segment de surface de la membrane en matière plastique souple et la plaque frontale.

4. Boîte d'installation selon l'une des revendications 1 à 3, **caractérisée en ce que** la largeur du contour d'engagement (10, 10.1) de son ouverture de réception d'outil se rétrécit dans le sens de la profondeur du contour d'engagement (10).

5. Boîte d'installation selon l'une des revendications 1 à 4, **caractérisée en ce que** le segment de surface (11) de la membrane en matière plastique souple (8, 8.1) limitant le contour d'engagement (10, 10.1) présente une épaisseur de matériau plus grande que les zones de surface avoisinantes de la membrane en matière plastique souple (8, 8.1).

6. Boîte d'installation selon l'une des revendications 1 à 5, **caractérisée en ce que** l'ouverture d'installation (14) se trouve dans une partie non courbe du corps de boîte (2).

7. Boîte d'installation selon l'une des revendications 1 à 6, **caractérisée en ce qu'**un moyen d'ouverture (19), destiné à ouvrir ou à enlever la membrane en matière plastique souple (8.1), est également moulé, depuis la face extérieure de la boîte, sur la membrane en matière plastique souple (8.1) orientée vers la face extérieure de la boîte.

8. Boîte d'installation selon la revendication 7, **caractérisée en ce que** le moyen d'ouverture (19) sur la face extérieure présente un contour d'engagement (21) destiné à recevoir un outil, dont l'ouverture de réception d'outil est orientée dans le sens opposé à celui du contour d'engagement (10.1) de la face intérieure.

9. Boîte d'installation selon la revendication 8, **caractérisée en ce que** le contour d'engagement (21) du moyen d'ouverture (19) sur la face extérieure est serti par un segment de surface de la membrane en matière plastique souple (8.1), par une plaque frontale (12.1) à distance de ce segment de surface et deux éléments latéraux (20, 20.1) qui relient la plaque frontale (12.1) avec le segment de surface.

10. Boîte d'installation selon la revendication 8 ou 9, **caractérisée en ce que** le contour d'engagement du moyen d'ouverture (22) extérieur est serti par un segment de surface de la membrane en matière plastique souple (8.2) et par une plaque frontale (12.2) située à distance de ce segment de surface et **en ce que** la plaque frontale (12.2) est reliée par un montant (24) avec la membrane en matière plastique souple (8.2), lequel montant (24) est disposé de manière centrée par rapport à la largeur du contour d'engagement.

11. Boîte d'installation selon la revendication 9 ou 10, **caractérisée en ce que** la plaque frontale (12.2) et la membrane en matière plastique souple (8.2) sont reliées l'une à l'autre dans une zone de base (26), laquelle zone de base (26) s'étend au moins sur 20 % du diamètre de l'ouverture d'installation fermée par la membrane en matière plastique souple (8.2).

12. Agencement de boîte d'installation comportant une boîte d'installation selon l'une des revendications 1 à 11 et comportant une pièce tubulaire de liaison, qui peut être engagée après enlèvement de la membrane en matière plastique souple (8, 8.1), en partant de l'intérieur du corps de boîte, dans au moins une des ouvertures d'installation (14) afin de réaliser un tunnel de liaison entre cette boîte d'installation et une autre boîte d'installation.
